# EUROPEAN PATENT APPLICATION

(11) **EP 4 671 902 A1**
(43) Date of publication of application: **31.12.2025**
(21) Application number: 25178788.3
(22) Date of filing: 26.05.2025
(51) Int. Cl.: G05D 1/60

(54) **A ROBOTIC LAWNMOWER SYSTEM AND A METHOD FOR CONTROLLING A ROBOTIC LAWNMOWER TO MOW LAWN IN A NARROW CORRIDOR**

(30) Priority: 24.06.2024 SE 2450688
(71) Applicant: Husqvarna AB, 561 82 Huskvarna (SE)
(72) Inventor: Arabäck, Niklas, 561 82 Huskvarna (SE)

(57) **Abstract**

The present disclosure relates to robotic lawnmower systems. More specifically, the present disclosure presents robotic lawnmower systems and methods for controlling a robotic lawnmower (100) to mow lawn exclusively in a narrow corridor (300) along a travel path (310). The narrow corridor (300) is an operational area in which the robotic lawnmower (100) is allowed to travel and to mow grass from a start point to an end point along said travel path (310).

## Description

### Technical Field

The present disclosure relates to robotic lawnmower systems. More specifically, the present disclosure presents robotic lawnmower systems and methods for controlling a robotic lawnmower to mow lawn exclusively in a narrow corridor along a travel path. The narrow corridor is an operational area in which the robotic lawnmower is allowed to travel and to mow grass from a start point to an end point along said travel path.

### Background

Traditional lawn maintenance demands considerable manual labour, including frequent mowing, which is both time-consuming and physically demanding. Robotic lawnmowers have been developed to automate this task and such automated, or robotic lawnmowers, are gaining increased interest. The increased interest comes from private persons as well as commercial or professional organizations (e.g., golf courses) and municipality organizations.

A typical robotic lawnmower system may operate through an integrated setup consisting of a robotic lawnmower, a charging station, boundary wires, and optional guide wires. The robotic lawnmower may be equipped with cutting blades, sensors, motors, and a control system, all powered by a rechargeable battery. The charging station generally serves as the docking point for recharging the lawnmower and is typically strategically placed within the mowing area. Boundary wires may be laid around the perimeter of the lawn and obstacles to create an invisible boundary that guides the operation of the lawnmower. The system may for example work by initially programming the lawnmower with a schedule and preferences via a control panel or mobile application (app.) e.g. downloaded to a mobile phone or tablet computer. The lawnmower may autonomously navigate the lawn, e.g. using sensors to detect the boundary wires and avoid obstacles. It may advantageously trim the grass incrementally, maintaining an even lawn height while leaving fine clippings that act as natural fertilizer. When the battery is low, the lawnmower can typically return to the charging station using the guide wire, recharge, and then resume mowing according to the set schedule. Advanced features of the robotic lawnmower system may include Global Positioning System (GPS) navigation for efficient lawn coverage, weather sensors to adjust the mowing schedule based on weather conditions, and possibly Artificial Intelligence (AI) for optimizing mowing patterns. Safety features such as lift and tilt sensors, collision sensors, and anti-theft PIN codes with alarms may also be added to ensure safe and secure operation. Connectivity via Bluetooth or Wi-Fi may also allow users to monitor and control the lawnmower remotely, enhancing the user convenience.

### Summary

It is in view of the above considerations and others that the various embodiments of the present invention have been made.

The inventor has identified significant challenges associated with the management of narrow corridors such as walkways using known robotic lawnmowers, particularly when these walkways are not straight. For example, there are difficulties in effectively mowing a walkway that crosses a field to the woods, as well as managing a transfer path between two lawns. Additionally, cutting a central strip of a road presents further complications. Current robotic mowers generally lack the capability to navigate and maintain such irregularly shaped and complex pathways efficiently. These limitations result in incomplete or inconsistent mowing, leaving certain areas untrimmed or requiring manual intervention. Furthermore, the need for precise mowing in professional settings, such as golf courses, underscores the inadequacy of existing solutions to address these specific mowing challenges.

A general object of the present disclosure is therefore to provide improved management of narrow corridors, e.g. walkways, using robotic lawnmowers.

This general object is addressed by the appended independent claims. Advantageous embodiments are defined in the appended dependent claims.

According to a first aspect, there is provided a robotic lawnmower system configured to control a robotic lawnmower to mow lawn exclusively in a narrow corridor along a travel path.

The narrow corridor is an area in which the robotic lawnmower is allowed to travel and to mow grass from a start point to an end point along said travel path.

The narrow corridor may be a walkway.

The robotic lawnmower system comprises at least one memory configured to store information about a reference point at the robotic lawnmower and to store information about at least one path width relative to said reference point. The path width sets the maximum width of said narrow corridor. For example, said maximum width of said narrow corridor may be 5 meters, advantageously 3 meters, preferably 2 meters, and most preferably 1-1,5 meters.

The robotic lawnmower system also comprises at least one recording device configured to record said travel path of the robotic lawnmower from the start point to the end point.

The robotic lawnmower system also comprises at least one controller configured to: receive, from the at least one memory, information about the reference point at the robotic lawnmower and information about the at least one path width relative to said reference point; based on received information about the reference point at the robotic lawnmower and information about the at least one path width relative to said reference point, determine virtual boundaries to define the narrow corridor between the start point and the end point along the travel path; and cause the robotic lawnmower to travel and mow lawn exclusively within the narrow corridor along the travel path.

In some embodiments, the at least one memory may be configured to store information about first and second path widths relative to said reference point. For example, the first path width may be a path width on a right-side relative to a travel direction of the robotic lawnmower and the second path width may be a left-side relative to a same travel direction of the robotic lawnmower.

In some embodiments, the recording device may be configured to record said travel path while the robotic lawnmower travels from the start point to the end point.

In some embodiments, the recording device may be configured to record said travel path while the robotic lawnmower travels from the start point to the end point and from the end point back to the start point.

In some embodiments, the recording device may be configured to record said travel path while the robotic lawnmower travels along a marked line in the lawn to be mowed, such as a color-marked line.

In some embodiments, the recording device may be configured to record said travel path while the robotic lawnmower travels along an already mowed lawn to be mowed, wherein said already mowed lawn is defined by outer boundaries set by un-mowed and thus comparatively considerably taller grass.

In some embodiments, the recording device may be configured to record said travel path while the robotic lawnmower travels along an already mowed lawn to be mowed, wherein said already mowed lawn is defined by outer boundaries defined by areas of non-grass such as asphalt, gravel, water course, or similar.

In some embodiments, the robotic lawnmower system may further comprise at least one input device, wherein information about the reference point at the robotic lawnmower is configurable by means of the at least one input device and/or the information about the at least one path width relative to said reference point is configurable by means of the at least one input device. In advantageous embodiments, the at least one input device may comprise the earlier mentioned at least one recording device.

In some embodiments, the at least one input device may comprise a user interface configured to receive user input from a user during a user's operation and interaction with said user interface, wherein said travel path may be recorded by means of the at least one recording device through the user's operation and interaction with said user interface.

In some embodiments, the at least one controller may be configured to cause the robotic lawnmower to travel and mow lawn within the narrow corridor in any one or a combination of the following patterns:
(1) Parallel back and forth;
(2) Parallel circular;
(3) Orthogonal back and forth;
(4) Sick sack;
(5) Angled parallel symmetry;
(6) X-symmetry.

In some embodiments, the at least one memory is further configured to store information about safety parameters, the safety parameters defining boundaries related to safety concerns for the robotic lawnmower, and the at least one controller is further configured to receive, from the at least one memory, the information about safety parameters; and to cause the robotic lawnmower to travel and mow lawn exclusively within the narrow corridor along the travel path only on condition that the narrow corridor meets the requirements as defined by the safety parameters.

According to a second aspect, there is provided a method controlling a robotic lawnmower to mow lawn exclusively in a narrow corridor along a travel path. The method may be performed by, or otherwise implemented in a robotic lawnmower system.

The narrow corridor is an area in which the robotic lawnmower is allowed to travel and to mow grass from a start point to an end point along said travel path.

The narrow corridor may be a walkway.

The method comprises storing information about a reference point at the robotic lawnmower and storing information about at least one path width relative to said reference point. The path width sets the maximum width of said narrow corridor. For example, said maximum width of said narrow corridor may be 5 meters, advantageously 3 meters, preferably 2 meters, and most preferably 1-1,5 meters.

The method also comprises recording said travel path of the robotic lawnmower from the start point to the end point.

The method also comprises receiving stored information about the reference point at the robotic lawnmower and stored information about the at least one path width relative to said reference point; based on received information about the reference point at the robotic lawnmower and the received information about the at least one path width relative to said reference point, determine virtual boundaries to define the narrow corridor between the start point and the end point along the travel path; and causing the robotic lawnmower to travel and mow lawn exclusively within the narrow corridor along the travel path.

In some embodiments, the method may comprise storing information about first and second path widths relative to said reference point. For example, the first path width may be a path width on a right-side relative to a travel direction of the robotic lawnmower and the second path width may be a left-side relative to a same travel direction of the robotic lawnmower.

In some embodiments, the method may comprise recording said travel path while the robotic lawnmower travels from the start point to the end point.

In some embodiments, the method may comprise recording said travel path while the robotic lawnmower travels from the start point to the end point and from the end point back to the start point.

In some embodiments, the method may comprise recording said travel path while the robotic lawnmower travels along a marked line in the lawn to be mowed, such as a color-marked line.

In some embodiments, the method may comprise recording said travel path while the robotic lawnmower travels along an already mowed lawn to be mowed, wherein said already mowed lawn is defined by outer boundaries set by un-mowed and thus comparatively considerably taller grass.

In some embodiments, the method may comprise recording said travel path while the robotic lawnmower travels along an already mowed lawn to be mowed, wherein said already mowed lawn is defined by outer boundaries defined by areas of non-grass such as asphalt, gravel, water course, or similar.

In some embodiments, the method may comprise configuring/re-configuring information about the reference point at the robotic lawnmower and/or configuring/reconfiguring the information about the at least one path width relative to said reference point.

In some embodiments, the method comprises receiving user input from a user, e.g. through a user interface.

In some embodiments, the method comprises causing the robotic lawnmower to travel and mow lawn within the narrow corridor in any one or a combination of the following patterns:
(i) Parallel back and forth;
(ii) Parallel circular;
(iii) Orthogonal back and forth;
(iv) Sick sack;
(v) Angled parallel symmetry;
(vi) X-symmetry.

In some embodiments, the method may comprise storing information about safety parameters, the safety parameters defining boundaries related to safety concerns for the robotic lawnmower, and receiving the stored information about safety parameters; and causing the robotic lawnmower to travel and mow lawn exclusively within the narrow corridor along the travel path only on condition that the narrow corridor meets the requirements as defined by the safety parameters.

According to a third aspect, there is provided a computer program comprising instructions which, when executed on at least one processor, cause the at least one processor to carry out the method according to the first aspect. A carrier comprising the computer program according to the third aspect is also provided. The carrier may be any one of an electronic signal, an optical signal, a radio signal, or a computer-readable medium.

The various aspects and embodiments described throughout this disclosure offers advantages in the management of narrow corridors, e.g. walkways, using robotic lawnmowers, particularly for pathways that are not straight. The various aspects and embodiments described herein allow for effectively handling complex mowing tasks, such as mowing a narrow corridor that crosses a field to the woods or mowing a narrow corridor between two lawns. Additionally, it enables precise cutting of a central grass strip of a road. The various aspects and embodiments allow for robotic lawnmowers to navigate and maintain irregularly shaped and intricate pathways efficiently, ensuring thorough and consistent mowing. Furthermore, this capability addresses the precise mowing requirements in professional settings, such as golf courses, providing a comprehensive solution to the challenges posed by existing robotic mowing technologies known in the art.

### Brief Description of the Drawings

These and other aspects, features and advantages will be apparent and elucidated from the following description of various embodiments, reference being made to the accompanying drawings, in which:
Fig. 1 illustrates a schematic overview of a robot lawnmower;
Fig. 2 illustrates a schematic view of a robotic lawnmower system;
Fig. 3 illustrates an example embodiment implementing the robotic lawnmower system where the lawnmower is illustrated to travel along a path in a narrow corridor, e.g. a walk path;
Fig. 4 illustrates a schematic overview of an embodiment of the robot lawnmower in Fig. 1;
Fig. 5 illustrates a schematic overview of an embodiment of the robot lawnmower in Fig. 1;
Fig. 6 illustrates an example use case where embodiments of the present disclosure can be put into practice:
Fig. 7 illustrates another example use case where embodiments of the present disclosure can be put into practice:
Figs. 8A-8G illustrate various example patterns of mowing within a narrow corridor;
Figs. 9A-9B illustrate example patterns of mowing in the event obstacles exist within the narrow corridor to be mowed;
Fig. 10 is a flowchart of an example embodiment of a method for controlling a robotic lawnmower; and
Fig. 11 is a schematic illustration of a (non-transitory) computer-readable (storage) medium.

### Detailed Description of Embodiments

The present invention will now be described more fully hereinafter. The invention may, however, be embodied in many different forms and should not be construed as limited to the embodiments set forth herein; rather, these embodiments are provided by way of example so that this disclosure will be thorough and complete, and will fully convey the scope of the invention to those persons skilled in the art. Like reference numbers refer to like elements throughout the description.

As described above, there may exist challenges associated with the management of narrow corridors such as walkways using known robotic lawnmowers. For example, there may be difficulties in effectively mowing a walkway, e.g. walkways that cross a field to the woods, or managing a transfer path between two lawns. Additionally, cutting a central strip of a road may presents similar complications. Current robotic mowers generally lack the capability to navigate and maintain such irregularly shaped and complex pathways efficiently. These limitations result in inadequate mowing, leaving certain areas untrimmed or possibly requiring manual intervention. Furthermore, the need for precise mowing in professional settings, such as golf courses, underscores the inadequacy of existing solutions to address these specific mowing challenges.

To address this, and in accordance with an aspect of this disclosure, the present disclosure presents a robotic lawnmower system configured to control a robotic lawnmower to mow lawn exclusively in a narrow corridor (e.g., a walk path) along a travel path. The narrow corridor is an operational area in which the robotic lawnmower is allowed to travel and to mow grass from a start point to an end point along said travel path. The robotic lawnmower system comprises one or more memories configured to store information about a reference point at the robotic lawnmower and to store information about at least one path width relative to said reference point. The robotic lawnmower system also comprises one or more recording devices configured to record said travel path of the robotic lawnmower from the start point to the end point. The robotic lawnmower system also comprises one or more controllers configured to: receive, from the at least one memory, information about the reference point at the robotic lawnmower and information about the at least one path width relative to said reference point; based on received information about the reference point at the robotic lawnmower and information about the at least one path width relative to said reference point, determine virtual boundaries to define the narrow corridor between the start point and the end point along the travel path; and cause the robotic lawnmower to travel and mow lawn exclusively within the narrow corridor along the travel path.

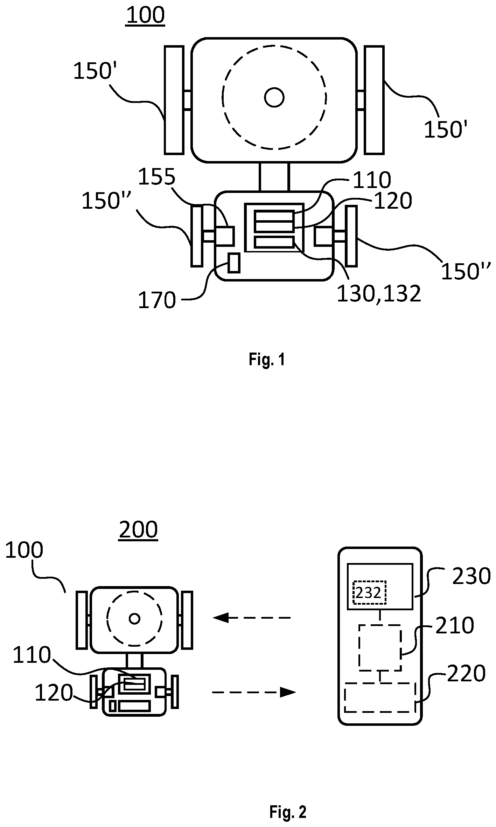

Reference is now made to Figs. 1 and 2, which illustrates a schematic overview of a robotic lawnmower 100. The robotic lawnmower 100 may have a front carriage and a rear carriage. It is appreciated that the present disclosure is not limited to a robotic lawnmower 100 having separate front and rear carriages. Rather, the robotic lawnmower 100 may also be of a type that comprises one single integral body.

The robotic lawnmower 100 comprises a plurality of wheels 150. In the exemplary embodiment of Fig. 1, the robotic lawnmower 100 comprises two pair of wheels 150', 150''. One pair of front wheels 150' is arranged in the front carriage and one pair of rear wheels 150'' is arranged in the rear carriage. However, it may be appreciated that the numbers and locations of the plurality of wheels 150 of the robotic lawnmower 100 in the present disclosure is not limited to any number and/or location of the plurality of wheels 150. At least some of the wheels 150 are drivably connected to at least one electric motor 155. It is appreciated that combustion engines may alternatively be used, possibly in combination with an electric motor.

With further reference to the Fig. 2, an example embodiment according to a first aspect will now be described. Fig. 2 shows a schematic view of a robotic lawnmower system 200 according to one embodiment. As will be appreciated, the schematic view is not to scale. As illustrated in Fig. 2, the robotic lawnmower system 200 comprises at least one robotic lawnmower 100, at least one controller 110, 210 and at least one memory 120, 220. The robotic lawnmower 100 is configured to travel along a travel path.

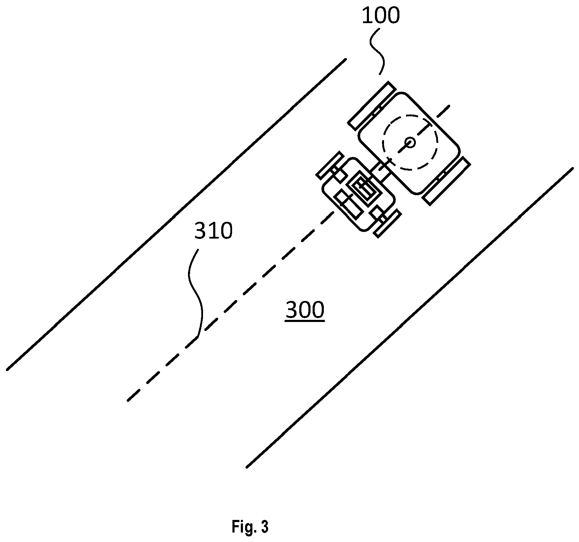

In more detail, and with reference to the example shown in Fig. 3, robotic lawnmower system 200 is configured to control the robotic lawnmower 100 to mow lawn exclusively in a narrow corridor 300 along a travel path 310. As used herein, the narrow corridor 300 is an operational area in which the robotic lawnmower 100 is allowed to travel. The robotic lawnmower is allowed to operate to mow grass from a start point to an end point along said travel path 310, i.e. within the narrow corridor 300.

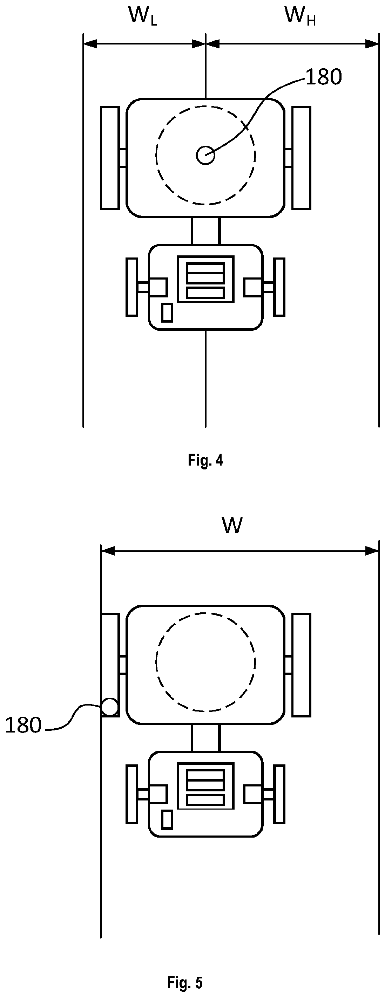

With continued reference to Fig. 2 and also to Figs. 4-5, the at least one memory 120, 220 is configured to store information about a reference point 180 at the robotic lawnmower 100. The at least one memory 120, 220 is additionally configured to store information about at least one path width W, W_{H}, W_{L} relative to said reference point 180. The path width W, W_{H}, W_{L} sets a maximum width of said narrow corridor 300.

In some embodiments, the maximum width of the operational area defined by the narrow corridor 300 is 5 meters, advantageously 3 meters, preferably 2 meters, and most preferably 1-1,5 meters.

As can be seen in Fig. 4, the reference point 180 may be positioned at a center location of the robotic lawnmower 100. In this embodiment, the at least one memory 120. 220 may be configured to store information about the first and second path widths W_{H}, W_{L}, respectively, relative to the centered reference point 180. As can be seen in Fig. 4, the first path width may be a path width W_{H} on a right-side relative to a travel direction of the robotic lawnmower 100. In addition, the second path width W_{L} may be a left-side relative to a same travel direction of the robotic lawnmower 100. In this embodiment, the total width being the sum of the first path width W_{H} and the second W_{L} sets a maximum width of the operational area, i.e. the narrow corridor 300.

As can be seen in Fig. 5, the reference point 180 may alternatively be positioned at the most left-side location of the robotic lawnmower 100. In this embodiment, the at least one memory 120. 220 may be configured to store information about the width W, relative to this reference point 180. In this embodiment, the width W sets the maximum width of the operational area, i.e. the narrow corridor 300.

The reference point 180 can be placed, or otherwise located, in different positions too, such as at the most right-side location of the robotic lawnmower.

In some embodiments, the robotic lawnmower system 200 is provided with at least one input device 130, 230. For example, information about the reference point at the robotic lawnmower may be configurable by means of this at least one input device 130, 230. Additionally, or alternatively, the information about the at least one path width W, W_{H}, W_{L} relative to said reference point 180 may be configurable by means of this at least one input device 130, 230. This is advantageous as this enables the operator to flexibly configure, or re-configure, the location of the reference point 180 at the robotic lawnmower 100 and the respective width(s) defining the operational area of the narrow corridor 300. In some use cases, it may be advantageous to have centered reference point 180 as in Fig 4, whereas for more complex narrow corridors 300 it may be advantageous to provide the option to configure the reference point at a most left-side (or, most right-side) location of the robotic lawnmower 100.

As understood from Fig. 2, the at least one memory 120, 220 may be the internal memory 120 of the at least one robotic lawnmower 100, and/or the at least one memory 120, 220 may be a memory 220 located remotely from the at least one robotic lawnmower 100, e.g. remotely in a cloud-based solution. The at least one memory 120, 220 may be implemented using any commonly known technology for computer-readable memories such as ROM, RAM, SRAM, DRAM, FLASH, DDR, SDRAM or some other memory technology. '

In embodiments where the robotic lawnmower system 200 comprises a plurality of robotic lawnmowers 100, it may be appreciated that the at least one memory 120, 220 may be shared between the plurality of robotic lawnmowers 100. In these embodiments, the at least one memory may be a memory 220 located remotely from the plurality of robotic lawnmowers 100, e.g. remotely in a cloud-based solution or in a central server. Alternatively, the at least one memory may be the internal memories 120 of the plurality of robotic lawnmowers 100 and shared between the robotic lawnmowers 100.

The at least one controller 110, 210 is configured to control the operation of the at least one robotic lawnmower 100. The controller 110, 210 is configured to read instructions from the at least one memory 120, 220 and execute these instructions to control the operation of the at least one robotic lawnmower 100. In one embodiment, the at least one controller 210 is embodied as software, e.g. remotely in a cloud-based solution. In another embodiment, the at least one controller 110, 210 may be embodied as a hardware controller. The at least one controller 110, 210 may be implemented using any suitable, publicly available processor or Programmable Logic Circuit (PLC).

The at least one controller 110, 210 may, for example, be the controller 110 located in the at least one lawnmower 100. According to another example, the at least one controller 210 may be located in a device that is separate from the robotic lawnmower 100. When the at least one controller 210 is located in another device than in the at least one robotic lawnmower 100, the separate device is communicatively coupled to the at least one robotic lawnmower 100. They may be communicatively coupled to each other by a wireless communication interface. Additionally, or alternatively, the wireless communication interface may be used to communicate with other devices, such as servers, personal computers or smartphones, charging stations, remote controls, other robotic lawnmowers or any remote device, which comprises a wireless communication interface and a controller. Examples of such wireless communication are Bluetooth^{®}, Global System Mobile (GSM) and LTE (Long Term Evolution), 5G New Radio, to exemplify a few.

With continued reference to Figs 2 through 4, the at least one controller 110, 210 is configured to receive, from the at least one memory 120, 220, information about the reference point 108 at the robotic lawnmower 100 and information about the at least one path width W, W_{H}, W_{L} relative to said reference point 180. Based on this information about the reference point 180 at the robotic lawnmower 100 and information about the at least one path width W, W_{H}, W_{L} relative to said reference point 180, the at least one controller is configured to determine virtual boundaries to define the operational area of the narrow corridor 300 between the start point and the end point along the travel path 310. Furthermore, the at least one controller is configured to cause the robotic lawnmower 100 to travel and mow lawn exclusively within the thus defined narrow corridor 300 along the travel path 310.

The robotic lawnmower system 200 advantageously also comprises at least one recording device 132, 232.

The at least one recording device 132, 232 may, for example, be the recording device 132 located in the at least one robotic lawnmower 100. In some embodiments, the recording device 132 may be integral with the input device 130 of the robotic lawnmower 100. That is, the input device 130 of the robotic lawnmower 100 may comprise the recording device 132. In yet other embodiments, the recording device 132 of the robotic lawnmower is separate and distinct from the input device 130 of the robotic lawnmower 100. According to another example, the at least one recording device 132, 232 may be located in a device that is separate from the robotic lawnmower 100. When the at least one recording device 232 is located in another device than in the at least one robotic lawnmower 100, the separate device is communicatively coupled to the at least one robotic lawnmower 100. In some embodiments, the recording device 232 may be integral with the input device 230 of the separate device. In yet other embodiments, the recording device 232 of separate device is separate and distinct from the input device 230 of the separate device.

Reference is again made to Figs. 2 in conjunction with Fig. 3. In some embodiments, the recording device 132, 232 may be configured to record said travel path 310 while the robotic lawnmower 100 travels from the start point to the end point. Additionally, or alternatively, the recording device 132, 232 is configured to record said travel path 310 while the robotic lawnmower 100 travels from the start point to the end point and from the end point back to the start point.

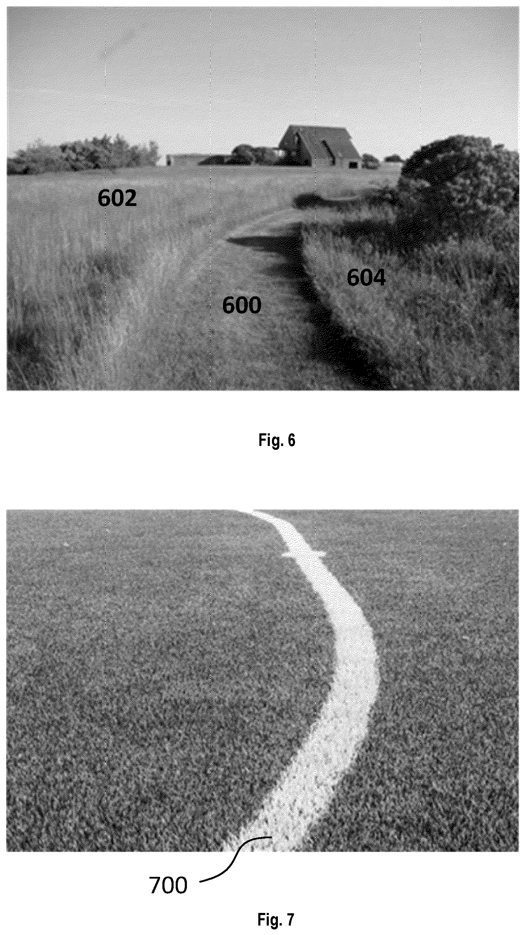

Reference is now made to Figs. 2-3 in conjunction with Fig. 6. In some embodiments, the recording device 132 232 is configured to record the travel path 310 while the robotic lawnmower 100 travels along an already mowed lawn 600 to be mowed. For example, as can be seen in Fig. 6, the already mowed lawn 600 may be defined by outer boundaries set by un-mowed and thus comparatively considerably taller grass 602, 604. Optionally, the at least one robotic lawnmower may be operable to sense the outer boundaries defined by the comparatively taller grass, e.g. by means of sensing devices operable to sense or otherwise detect the considerably taller grass 602, 604.

Additionally, or alternatively, the already mowed lawn 600 may be defined by outer boundaries defined by areas of non-grass. Areas of non-grass may include, but are not limited to, areas of asphalt, gravel, or a water course, or similar. Optionally, the at least one robotic lawnmower 100 may be operable to sense the outer boundaries defined by the non-grass areas.

Reference is now made to Figs. 2-3 in conjunction with Fig. 7. Advantageously, the recording device 132, 232 may be configured to record said travel path 310 while the robotic lawnmower travels along a marked line 700 in the lawn to be mowed. The marked line 700 may e.g. be a color-marked line as shown in Fig. 7.

In advantageous embodiments, the at least one input device 130, 203 comprises a user interface configured to receive user input from a user during a user's operation and interaction with said user interface. For example, the travel path 310 may then be recorded by means of the at least one recording device 132, 232 through the user's operation and interaction with said user interface.

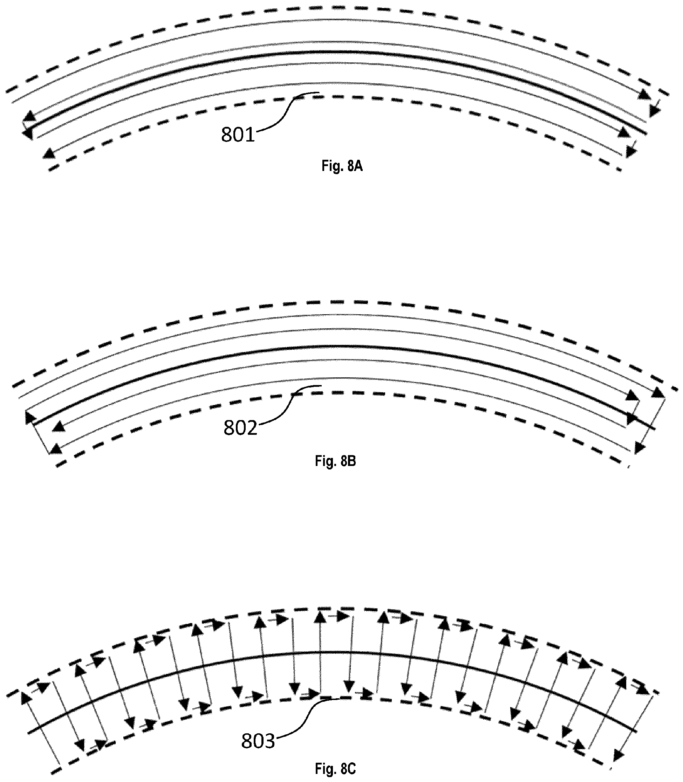

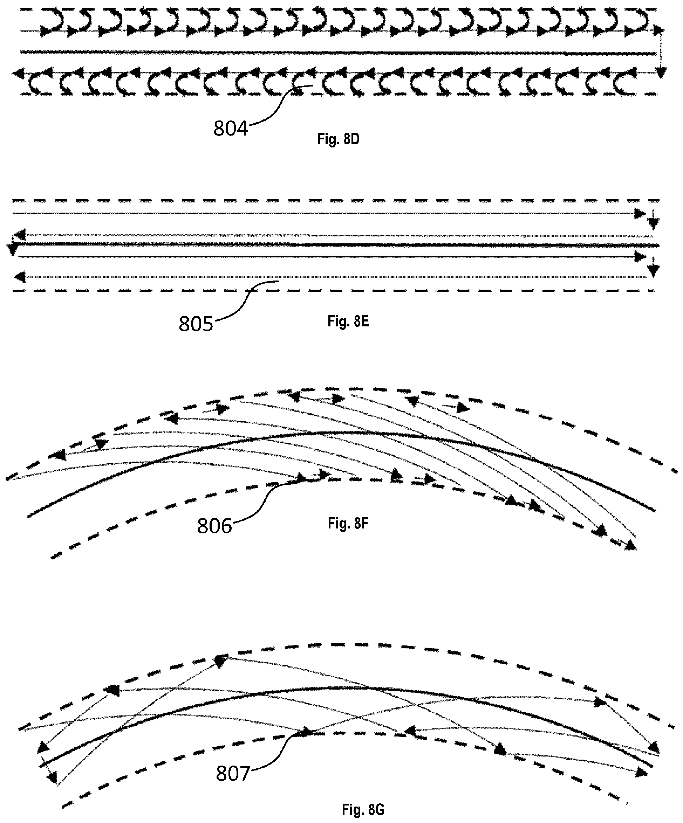

Reference is now made to Figs. 8A-8G illustrating different optional mowing patterns within narrow corridor 300. The at least one controller 120, 220 may be configured to cause the robotic lawnmower to travel and mow lawn within the narrow corridor 300 in any one or a combination of the following patterns:
- Parallel back and forth 801 (Fig. 8A);
   o The lawnmower 100 travels back and forth parallel along the travel path 310, also referred to as the virtual guide in connection with these examples.
- Parallel circular 802 (Fig. 8B);
   o The lawnmower 100 travels in circular, parallel along the travel path 310 (virtual guide).
- Orthogonal back and forth 803 (Fig. 8C);
   o The lawnmower 100 travels back and forth orthogonal to the travel path 310 (virtual guide). This mowing pattern may, e.g., be added occasionally to minimize the risk of high grass for outer wheels.
- Sick-sack 804 (Fig. 8D), 805 (Fig. 8E):
   o The lawnmower 100 may e.g. travel stepwise, i.e. travel forward and turn 20 degrees and then travel forward again along the travel path 310 (virtual guide). When completed, the parallel back and forth symmetry mowing pattern may be applied, or repeated (Fig. 8A). This mowing pattern may, e.g., be added occasionally to minimize the risk of high grass for outer wheels.
- Angled parallel symmetry 806 (Fig. 8F)
   o The lawnmower 100 travels back and forth along to the travel path 310 (virtual guide) with an approach angle of, e.g., 20 degrees. This mowing pattern may also be used to minimize the risk of high grass for the outer wheel.
- X-symmetry 807 (Fig. 8G).
   ∘ The lawnmower 100 travels back and forth along to the travel path 310 (virtual guide) with an approach angle of, e.g., 20 degrees to form X-symmetry. This mowing pattern may also be used to minimize the risk of high grass for the outer wheel.

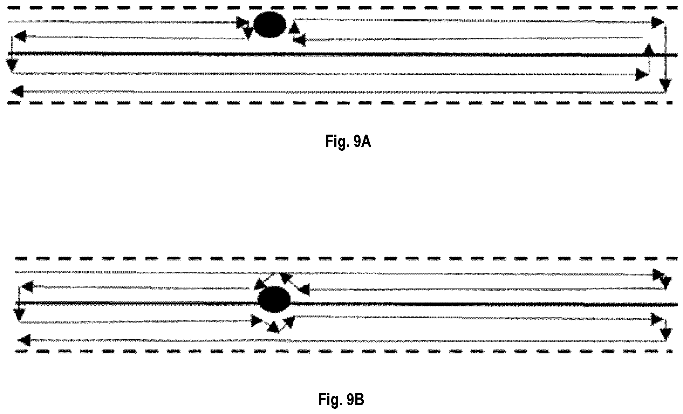

Reference is now made to Figs. 9A-9B illustrating optional mowing patterns within the narrow corridor 300 if there is an obstacle within the narrow corridor. If there is an obstacle in the way along the travel path 310, the robotic lawnmower 100 is operable to handle this in various ways. This is not an essential part, or focus, of this disclosure and will therefore not be discussed in further detail herein. Examples of patents describing techniques for handling obstacles when mowing are EP 2 885 684 B1, EP 3 571 561 B1 and EP 3 234 721 B1.

Reference is again made to Figs. 1 through 9, In some embodiments, the at least one memory 120, 220 is additionally configured to store information about safety parameters. The safety parameters define boundaries related to safety concerns for the robotic lawnmower 100. The at least one controller 110, 210 may be further configured to: receive, from the at least one memory 120, 220, the information about safety parameters; and cause the robotic lawnmower 100 to travel and mow lawn exclusively within the narrow corridor 300 along the travel path 310 only on condition that the narrow corridor 300 meets the requirements as defined by the safety parameters. The Swedish patent application no. 2251396-4 describes a technology that is conceivable in this regard, and this will therefore not be further detailed herein.

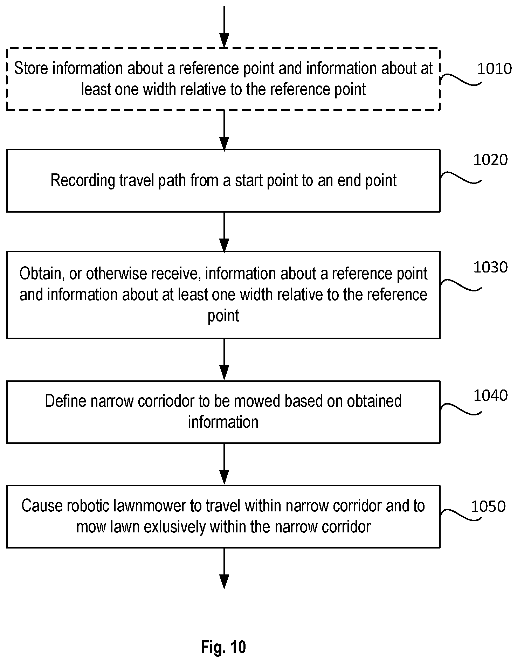

Reference is now made to Fig. 10, which illustrates a flowchart of a method for controlling a robotic lawnmower 100 according to an example embodiment of a second aspect of this disclosure. The method may be performed by, or otherwise implemented in a robotic lawnmower system 200 discussed in conjunction with Fig. 2. In Fig. 10, the example embodiment suggests a method 1000 for controlling the robotic lawnmower 100 to mow lawn exclusively in a narrow corridor 300 along a travel path 310. The narrow corridor 300 is an operational area in which the robotic lawnmower 100 is allowed to travel and to mow grass from a start point to an end point along said travel path 310. The narrow corridor 300 may for example be a walkway.

*Action 1010:* Information about a reference point 180 at the robotic lawnmower 100 is stored, e.g., in at least one memory 120, 220. Additionally, information about at least one path width W, W_{H}, W_{L} relative to said reference point 180 is stored in the at least one memory 120, 220. The path width sets the maximum width of the narrow corridor 300. For example, the maximum width of the narrow corridor may be 5 meters, advantageously 3 meters, preferably 2 meters, and most preferably 1-1,5 meters.

*Action 1020:* The travel path 310 of the robotic lawnmower 100 from the start point to the end point is recorded, e.g. by a recording device 132, 232.

*Action 1030:* Stored information about the reference point 180 at the robotic lawnmower 100 is obtained, or otherwise received. In addition, stored information about the at least one path width W, W_{H}, W_{L} relative to said reference point 180 is obtained, or otherwise received.

*Action 1040:* Based on obtained information about the reference point 180 at the robotic lawnmower 100 as well as the obtained information about the at least one path width W, W_{H}, W_{L} relative to said reference point 180, virtual boundaries to define the narrow corridor 300 between the start point and the end point along the travel path 310 are determined, or otherwise established.

*Action 1050:* The robotic lawnmower 100 is caused to travel and to mow lawn exclusively within the narrow corridor 300 along the travel path 310, i.e. within the narrow corridor 300 that was defined in action 1040.

In some embodiments, the method 1000 may optionally comprise storing 1010 information about first and second path widths relative to said reference point. For example, the first path width may be a path width on a right-side relative to a travel direction of the robotic lawnmower 100 and the second path width may be a left-side relative to a same travel direction of the robotic lawnmower 100.

In some embodiments, the method 1000 may comprise recording 1020 said travel path 310 while the robotic lawnmower 100 travels from the start point to the end point.

In some embodiments, the method 1000 may comprise recording 1020 said travel path 310 while the robotic lawnmower 100 travels from the start point to the end point and from the end point back to the start point.

In some embodiments, the method 1000 may comprise recording 1020 said travel path 310 while the robotic lawnmower 100 travels along a marked line 700 in the lawn to be mowed, such as a color-marked line. For example, in some implementations, one or more recording devices (e.g., camera(s)) may be utilized to track the color-marked line. Additionally, it should be noted that the camera, or an alternative sensor, can be employed to detect or otherwise sense whether the mower 100 is situated on a forest road, or similar. This detection, or sensing, may e.g. be based on recognizing a strip of vegetation predominantly surrounded by gravel.

In some embodiments, the method 1000 may comprise recording 1020 said travel path 310 while the robotic lawnmower 100 travels along an already mowed lawn to be mowed. The already mowed lawn may be defined by outer boundaries set by un-mowed and thus comparatively considerably taller grass. Alternatively, or additionally, the already mowed lawn may be defined by outer boundaries defined by areas of non-grass such as asphalt, gravel, water course, or similar.

In some embodiments, the method 1000 may comprise configuring/reconfiguring information about the reference point 180 at the robotic lawnmower 100 and/or configuring/re-configuring the information about the at least one path width W, W_{H}, W_{L} relative to said reference point 180.

In some embodiments, the method 1000 comprises receiving user input from a user, e.g. through a user interface.

In some embodiments, the method 1000 comprises causing the robotic lawnmower 100 to travel and mow lawn within the narrow corridor in any one or a combination of the following patterns:
(i) Parallel back and forth;
(ii) Parallel circular;
(iii) Orthogonal back and forth;
(iv) Sick sack;
(v) Angled parallel symmetry;
(vi) X-symmetry.

In some embodiments, the method 1000 may additionally comprise storing information about safety parameters, the safety parameters defining boundaries related to safety concerns for the robotic lawnmower, and receiving the stored information about safety parameters; and causing the robotic lawnmower to travel and mow lawn exclusively within the narrow corridor along the travel path only on condition that the narrow corridor meets the requirements as defined by the safety parameters.

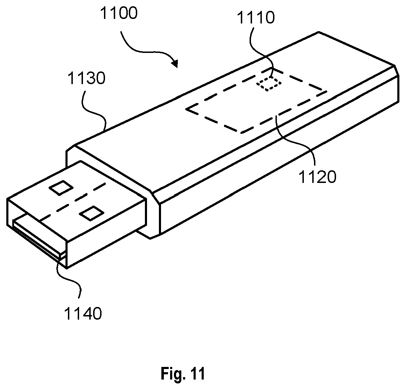

With reference to Fig. 11, a schematic illustration of a (non-transitory) computer-readable (storage) medium 1100 is shown according to one exemplary embodiment. The computer-readable medium 1100 may be associated with or connected to the robotic lawnmower system 200 as described herein and is capable of storing a computer program product 1110. The computer-readable medium 1100 in the disclosed embodiment is a memory stick, such as a Universal Serial Bus (USB) stick. The USB stick 1100 comprises a housing 1130 having an interface, such as a connector 1140, and a memory chip 1120. In the disclosed embodiment, the memory chip 1120 is a flash memory, i.e., a non-volatile data storage that can be electrically erased and reprogrammed. The memory chip 1120 stores the computer program product 1110 which is programmed with computer program code (instructions) that when loaded into a processor device, will perform a method, for instance the method 1000 explained with reference to FIG. 10. The USB stick 1100 is arranged to be connected to and read by a reading device for loading the instructions into the processor device. It should be noted that a computer-readable medium can also be other mediums such as compact discs, digital video discs, hard drives or other memory technologies commonly used. The computer program code (instructions) can also be downloaded from the computer-readable medium via a wireless interface to be loaded into the processing device.

The various aspects and embodiments described throughout this disclosure offers advantages in the management of narrow corridors, e.g. walkways, using robotic lawnmowers, particularly for pathways. The various aspects and embodiments described herein allow for effectively handling complex mowing tasks, such as mowing a narrow corridor, e.g. a narrow corridor that crosses a field to the woods or mowing a narrow corridor between two lawns. Additionally, it enables precise cutting of a central grass strip of a road. The various aspects and embodiments allow for robotic lawnmowers to navigate and maintain irregularly shaped and intricate pathways efficiently, ensuring thorough and consistent mowing. Furthermore, this capability addresses the precise mowing requirements in professional settings, such as golf courses, providing a comprehensive solution to the challenges posed by existing robotic mowing technologies known in the art.

As will be appreciated by those skilled in the art, modifications and other variants of the described aspects and embodiments will come to mind to one skilled in the art having benefit of the teachings presented in the foregoing description and associated drawings. Therefore, it is to be understood that the embodiments are not limited to the specific example embodiments described in this disclosure and that modifications and other variants are intended to be included within the scope of this disclosure. Furthermore, although specific terms may be employed herein, they are used in a generic and descriptive sense only and not for purposes of limitation. Therefore, a person skilled in the art would recognize numerous variations to the described embodiments that would still fall within the scope of the appended claims. As used herein, the terms "comprise/comprises" or "include/includes" do not exclude the presence of other elements or steps. Furthermore, although individual features may be included in different claims, these may possibly advantageously be combined, and the inclusion of different claims does not imply that a combination of features is not feasible and/or advantageous. In addition, singular references do not exclude a plurality.

## Claims

1. A robotic lawnmower system (200) configured to control a robotic lawnmower (100) to mow lawn exclusively in a narrow corridor (300) along a travel path (310), the narrow corridor (300) being an operational area in which the robotic lawnmower (100) is allowed to travel and to mow grass from a start point to an end point along said travel path (310), the robotic lawnmower system (200) comprising:
at least one memory (120; 220) configured to:
store information about a reference point (180) at the robotic lawnmower (100); and
store information about at least one path width (W; W_{H}, W_{L}) relative to said reference point (180), said path width (W; W_{H}, W_{L}) setting the maximum width of said narrow corridor (300); and
at least one recording device (132; 232) configured to:
record said travel path (310) of the robotic lawnmower (100) from the start point to the end point;
at least one controller (110; 210) configured to:
receive, from the at least one memory, information about the reference point (108) at the robotic lawnmower (100) and information about the at least one path width (W_{H}, W_{L}) relative to said reference point (180);
based on received information about the reference point (180) at the robotic lawnmower (100) and information about the at least one path width (W; W_{H}, W_{L}) relative to said reference point (180), determine virtual boundaries to define the narrow corridor (300) between the start point and the end point along the travel path (310); and
cause the robotic lawnmower (100) to travel and mow lawn exclusively within the narrow corridor (300) along the travel path (310).

2. The robotic lawnmower system (200) according to claim 1, wherein the at least one memory (120; 220) is configured to store information about first and second path widths (W_{H}, W_{L}) relative to said reference point (180).

3. The robotic lawnmower system (200) according to claim 2, wherein the first path width is a path width (W_{H}) on a right-side relative to a travel direction of the robotic lawnmower (100) and the second path width (W_{L}) is a left-side relative to a same travel direction of the robotic lawnmower (100).

4. The robotic lawnmower system (200) according to any one of the claims 1-3, wherein the recording device (132; 232) is configured to record said travel path (310) while the robotic lawnmower (100) travels from the start point to the end point.

5. The robotic lawnmower system (200) according to any one of the claims 1-3, wherein the recording device (132; 232) is configured to record said travel path (310) while the robotic lawnmower (100) travels from the start point to the end point and from the end point back to the start point.

6. The robotic lawnmower system (200) according to any one of the claims 1-3, wherein the recording device (132; 232) is configured to record said travel path (310) while the robotic lawnmower travels along a marked line (700) in the lawn to be mowed, such as a color-marked line.

7. The robotic lawnmower system (200) according to any one of the claims 1-3, wherein the recording device (132; 232) is configured to record said travel path (310) while the robotic lawnmower (100) travels along an already mowed lawn (600) to be mowed, wherein said already mowed lawn (600) is defined by outer boundaries set by un-mowed and thus comparatively considerably taller grass (602; 604).

8. The robotic lawnmower system (200) according to any one of the claims 1-3, wherein the recording device (132; 232) is configured to record said travel path (310) while the robotic lawnmower (100) travels along an already mowed lawn (600) to be mowed, wherein said already mowed lawn (600) is defined by outer boundaries defined by areas of non-grass such as asphalt, gravel, water course, or similar.

9. The robotic lawnmower system (200) according to any one of the claims 1-8, further comprising at least one input device (130; 230), and wherein information about the reference point (180) at the robotic lawnmower (100) is configurable by means of the at least one input device (130; 230); and/or the information about the at least one path width (W_{H}, W_{L}) relative to said reference point (180) is configurable by means of the at least one input device (130; 230).

10. The robotic lawnmower system (200) according to claim 8 when dependent on any one of claims 1-3, wherein the at least one input device (130; 230) comprises the at least one recording device.

11. The robotic lawnmower system (200) according to claim 10, wherein the at least one input device (130; 203) comprises a user interface configured to receive user input from a user during a user's operation and interaction with said user interface, and wherein said travel path (310) is recorded by means of the at least one recording device (132; 232) through the user's operation and interaction with said user interface.

12. The robotic lawnmower system (200) according to any one of the claims 1-11, wherein the at least one controller (120; 220) is configured to cause the robotic lawnmower to travel and mow lawn within the narrow corridor in any one or a combination of the following patterns:
- Parallel back and forth (801);
- Parallel circular (802);
- Orthogonal back and forth (803);
- Sick sack (804; 805):
- Angled parallel symmetry (806)
- X-symmetry (807).

13. The robotic lawnmower system (200) according to any one of the claims 1-12, wherein said maximum width of said narrow corridor is 5 meters, advantageously 3 meters, preferably 2 meters, and most preferably 1-1,5 meters.

14. The robotic lawnmower system (200) according to any one of the claims 1-13, wherein:
the at least one memory (120; 220) is further configured to store information about safety parameters, the safety parameters defining boundaries related to safety concerns for the robotic lawnmower (100), and
the at least one controller (110; 210) is further configured to receive, from the at least one memory, the information about safety parameters; and
to cause the robotic lawnmower (100) to travel and mow lawn exclusively within the narrow corridor (300) along the travel path (310) only on condition that the narrow corridor (300) meets the requirements as defined by the safety parameters.
